# FASCICULE DE BREVET EUROPEEN

(11) **EP 3 648 538 B1**
(45) Date de publication et mention de la délivrance du brevet: **17.08.2022**
(21) Numéro de dépôt: 19204242.2
(22) Date de dépôt: 21.10.2019
(51) Int. Cl.: H04W 74/08

(54) **PROCÉDÉ ET DISPOSITIF DE TRANSMISSION SANS FIL DE DONNÉES DANS DES RÉSEAUX**
VERFAHREN UND VORRICHTUNG ZUR DRAHTLOSEN DATENÜBERTRAGUNG IN NETZWERKEN
METHOD AND DEVICE FOR WIRELESS TRANSMISSION OF DATA IN NETWORKS

(30) Priorité: 29.10.2018 FR 1859994
(43) Date de publication de la demande: 06.05.2020
(73) Titulaire: Commissariat à l'Energie Atomique et aux Energies Alternatives, 75015 Paris (FR)
(72) Inventeur: KELLIL, Mounir, 91300 Massy-Palaiseau (FR); ROUX, Pierre, 78350 Jouy-en-Josas (FR); JANNETEAU, Christophe, 28210 Chaudon (FR)
(74) Mandataire: Marks & Clerk France

(56) Documents cités:
- US-A1- 2016 037 531
- MICHEL NAHAS ET AL: "Asynchronous relay selection protocol for distributed cooperative networks", WIRELESS COMMUNICATION SYSTEMS (ISWCS), 2012 INTERNATIONAL SYMPOSIUM ON, IEEE, 28 août 2012 (2012-08-28), pages 456-460, XP032263801, DOI: 10.1109/ISWCS.2012.6328409 ISBN: 978-1-4673-0761-1
- ZHANG NA ET AL: "Improved RTS-CTS algorithm to solve mobile hidden station problem in MANET", CROSS STRAIT QUAD-REGIONAL RADIO SCIENCE AND WIRELESS TECHNOLOGY CONFERENCE (CSQRWC), 2011, IEEE, 26 juillet 2011 (2011-07-26), pages 812-815, XP032459521, DOI: 10.1109/CSQRWC.2011.6037075 ISBN: 978-1-4244-9792-8

## Description

### Domaine de l'invention

L'invention se situe dans le domaine des communications sans fil, et concerne plus particulièrement un procédé et un dispositif de transmission de données dans les réseaux sans fil maillés.

### Etat de la Technique

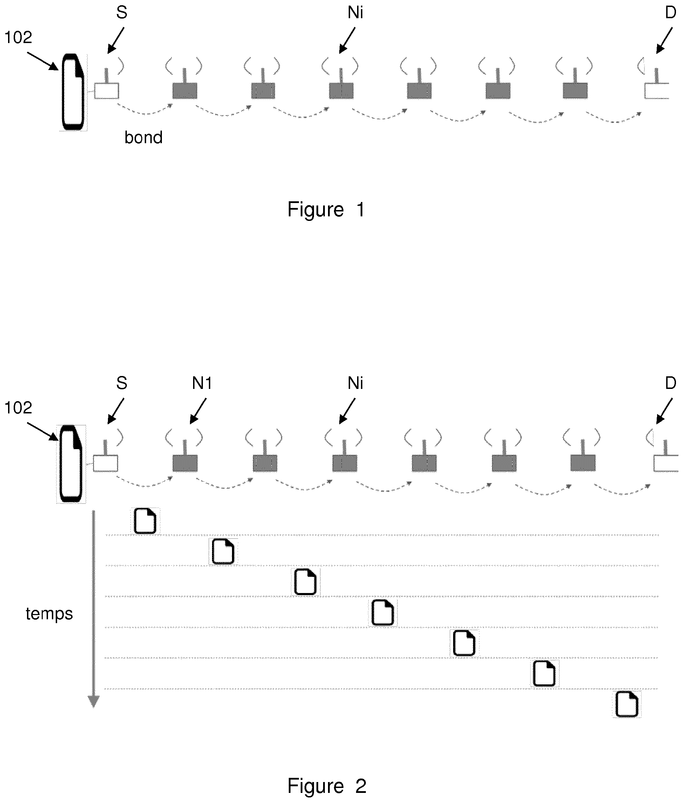

Dans les réseaux de communication sans fil, la transmission d'un fichier de données (102) d'un nœud source 'S' vers un nœud destination 'D' s'opère généralement via un ensemble de nœuds relais 'Ni' qui constitue un chemin de communication sans fil multi-bonds, tel que cela est illustré schématiquement sur la figure 1. Les nœuds intermédiaires 'ni' sont des relais de communication sans fil qui ne peuvent pas émettre et recevoir simultanément. Ce mode de communication est communément appelé mode « *half-duplex* ». La technologie sans fil peut exploiter par exemple des ondes radio électromagnétiques, ou bien selon un autre exemple, des ondes acoustiques en milieu sous-marin. Dans ces environnements, le débit de communication d'un nœud à son voisin est limité et la latence de communication n'est pas négligeable, en particulier s'il s'agit de communication acoustique. Par ailleurs, la distance entre les nœuds intermédiaires est supposée généralement être proche de la distance (en termes de portée radio) maximale offerte par la technologie sans fil utilisée. Il s'ensuit qu'une communication directe sur deux bonds est typiquement impossible, un nœud récepteur est supposé détecter seulement les signaux émis par ses deux nœuds voisins immédiats.

Aussi, un premier défi est de transmettre un fichier le plus rapidement possible d'un nœud émetteur au nœud destination à travers un réseau multi-bonds.

Une approche simple consiste à transmettre le fichier de données (102) depuis le nœud source 'S' sur le premier bond (par abus de langage pour désigner la transmission vers le premier nœud intermédiaire 'N1'), puis sur le second bond, etc., jusqu'à atteindre le nœud cible (D), comme cela est illustré en figure 2, à l'exemple des réseaux DTN (V. Cerf. et al., « Delay-Tolerant Networking Architecture », RFC 4838, April 2007). Les inconvénients de cette approche est qu'elle sous utilise les capacités de transmission en parallèle de fragments de fichiers sur plusieurs bonds.

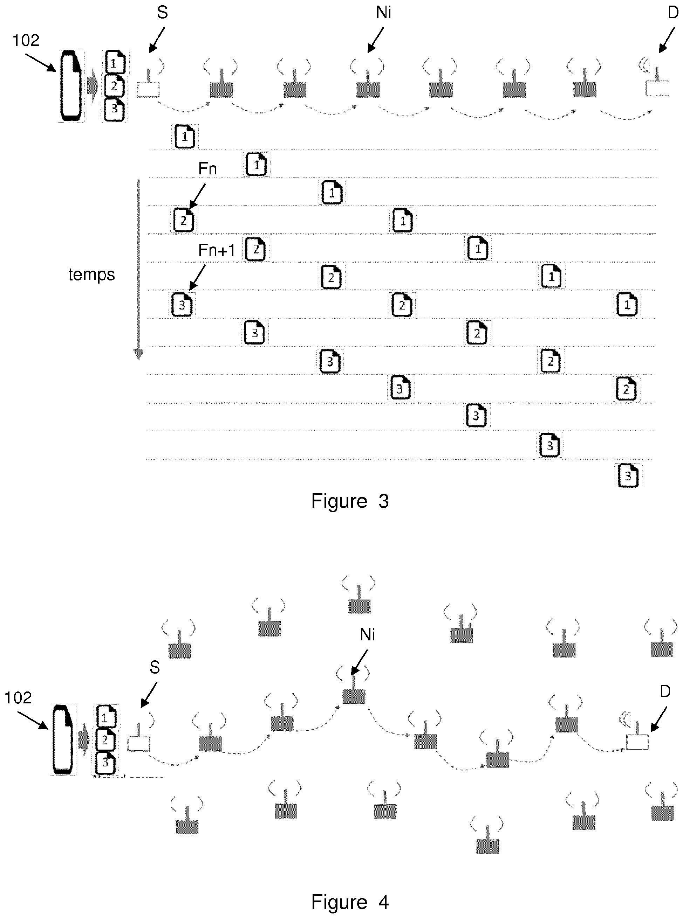

Une autre approche, dite multi-fragmentaire, consiste à fragmenter le fichier complet, puis à transmettre successivement les fragments de fichier (i.e. des paquets de données) sans attendre qu'un fragment « Fn » soit arrivé à destination avant de transmettre un fragment « Fn+1 ». La figure 3 illustre un tel séquencement multi-bonds multi-fragments (3 fragments dans le cas illustré). Cette approche est plus efficace que la transmission du fichier complet, car elle exploite le parallélisme pour accélérer la transmission. Dans le cas illustré, il est possible d'utiliser jusqu'à trois bonds en parallèle. Le gain est d'autant plus élevé que le nombre de bonds est important, puisque d'un côté (l'approche de la figure 2) il y a l'utilisation simultanée d'un seul lien de communication, et de l'autre côté (l'approche de la figure 3) il s'agit d'une utilisation simultanée pouvant atteindre le tiers des liens de communication. La limite cependant est qu'il n'est pas possible d'aller au-delà du taux d'utilisation de un bond sur trois. Quand une transmission est en cours sur un bond 'n', il n'est pas possible d'avoir des transmissions en cours sur les bonds 'n+1' et 'n+2'. Autrement dit, il peut y avoir à un moment donné, au plus 1 bond sur 3 qui est utilisé pour transmettre un fragment. Ceci se comprend en considérant que deux bonds successifs ne peuvent pas être simultanément actifs en transmission, car un nœud devrait alors à la fois émettre et recevoir, et en considérant aussi qu'en cas de transmissions actives sur des bonds 'n' et 'n+2', il y aurait un nœud qui reçoit des signaux issus de ses deux voisins immédiats et qui ne pourrait alors décoder ni l'un ni l'autre car chacun est une interférence pour l'autre. Cela conduit à la survenue d'une « collision ».

Pour pallier ces inconvénients et réaliser une approche optimale (i.e. parallélisation de la transmission en multi-bonds), une solution consiste à séquencer dans le temps les fragments émis par le premier nœud. Une fois un fragment « Fn » transmis par ce nœud, ce dernier est mis en état d'attente pendant le temps nécessaire à ce que le fragment Fn ait été reçu et envoyé par les deux prochains nœuds sur le chemin vers le destinataire, puis à transmettre le fragment Fn+1 une fois ce temps d'attente expiré. Si les temps de transmission sont reproductibles, ce séquencement simple peut suffire à garantir un comportement optimal.

Cependant, cette solution n'est pas satisfaisante car elle suppose de fixer un temps de pause (i.e. état d'attente) arbitraire et elle ne permet pas de s'adapter à la diversité des conditions de transmissions telle qu'on peut l'observer en pratique. En effet, les bonds n'ont souvent pas la même distance, ils ne souffrent pas du même niveau d'interférence, etc. Aussi pour contourner ces difficultés, il est possible d'augmenter le temps de pause. En prenant un temps de pause correspondant au temps nécessaire pour propager un fragment sur trois bonds lorsque les conditions de transmissions sont bonnes (c'est-à-dire que les bonds ne sont pas en limite et que les niveaux d'interférence sont faibles) et en multipliant ce temps par deux, voire par trois, il est probable que tout risque de collision dans la transmission multi-fragments multi-bonds soit évité. Par contre, les performances d'un tel système sont très sous optimales, puisque la vitesse de transmission du fichier de bout en bout sera très inférieure à ce qu'elle pourrait être.

Par ailleurs et plus généralement, la problématique évoquée dans le contexte des réseaux linéaires existe dans le contexte des réseaux maillés ou « mesh » selon l'anglicisme consacré. La figure 4 illustre schématiquement un contexte de réseau mesh, où en général un nœud passerelle assure le passage entre le réseau mesh et le réseau Internet.

Ce nœud passerelle (ou Gateway en anglais) est alors la destination 'D' (ou respectivement la source 'S') de toutes les données émises (ou respectivement reçues) par les nœuds 'Ni' du réseau mesh. Une fois établi un chemin de routage entre un nœud du réseau mesh et le nœud passerelle, la problématique est alors de savoir comment séquencer la transmission de fragments de fichiers sur ce chemin de façon à transmettre un volume de données le plus rapidement possible du nœud source au nœud passerelle.

Les réseaux mesh sont généralement constitués de nœuds qui n'ont pas la capacité d'émettre et de recevoir en même temps. Lorsqu'un nœud doit transmettre un paquet de données à l'un de ses voisins, il existe le risque que ce paquet ne soit pas reçu si une collision est intervenue du fait de la transmission simultanée d'un autre paquet par un nœud voisin qui a perturbé le nœud récepteur. Ce phénomène peut être réduit par l'application d'une fonction d'écoute du canal avant transmission : un nœud qui doit transmettre un paquet va écouter le canal de transmission pour s'assurer qu'il est silencieux, puis va basculer en mode émission et transmettre le paquet.

Cependant, ce principe ne peut que réduire et non éviter le risque de collision, et ce pour deux raisons majeures :
- La détection d'absence de signal émis (silence du canal) reste une notion relative : le nœud émetteur peut considérer que le canal est silencieux alors que le canal n'est en fait pas silencieux du point de vue du nœud récepteur qui peut percevoir des signaux émis par ses propres voisins, lesquels peuvent être indétectables pour le nœud émetteur ; et
- Le silence du canal avant la transmission d'un paquet ne signifie pas l'exclusivité du canal pendant cette transmission. Deux nœuds voisins devant émettre peuvent détecter le silence du canal simultanément, et basculer en mode transmission simultanément aussi, ce qui provoque des transmissions simultanées et donc des risques de collision.

Pour contourner cette difficulté, des extensions au principe CSMA-CA (« Carrier Sense Multiple Access with Collision Avoidance ») permettent de prévoir des messages d'acquittement du paquet reçu par le récepteur. Le paquet peut alors être répété jusqu'à réception d'un acquittement, de sorte que la transmission est finalement effective même s'il y a des collisions. Des compteurs aléatoires de retransmission sont alors introduits pour éviter le risque de collisions « à répétition ». Le principe CSMA-CA est défini par exemple par l'IEEE (Institute of Electrical and Electronics Engineers) dans les normes WiFi IEEE 802.11.

Une variante au principe CSMA-CA peut consister dans la mise en place de mécanismes de réservation via des signaux ou messages courts RTS (« Ready To Send ») et CTS (« Clear To Send ») par lesquels un émetteur réserve un canal pour la transmission d'un paquet de données plus long. Le message RTS est émis par le nœud souhaitant émettre le paquet. Il contient la durée prévisionnelle de la transmission du paquet. Il ne s'engage effectivement dans la transmission de ce paquet que lorsqu'il a reçu un message CTS du récepteur, confirmant la disponibilité du récepteur et le silence du canal tel qu'observé par ce récepteur. Le message CTS contient lui aussi la (même) durée prévisionnelle de transmission du paquet. Tous les nœuds voisins de l'émetteur ou du récepteur qui ont pu détecter soit le message CTS soit le message RTS entrent en état de rétention pour la durée indiquée. Ils sont sensés s'abstenir d'émettre durant le temps de transmission du paquet. Ils doivent attendre la fin de la transmission en cours, et toujours vérifier la disponibilité du canal avant leur propre transmission. Si des nœuds en état de rétention reçoivent des signaux RTS qui leur sont destinés, ils doivent attendre de quitter l'état de rétention avant d'envoyer le signal CTS.

Cependant, là encore, le risque de collision n'est pas écarté car il peut survenir sur les messages RTS et CTS eux-mêmes. De plus, le mécanisme RTS-CTS présente comme inconvénient la nécessaire prédictibilité du temps de transmission. Or ce temps de transmission est difficile à prévoir du fait de la variabilité des conditions de communication radio. Afin de garantir la transmission du paquet et l'absence de collision, il faut alors réserver le canal de transmission pour un temps très supérieur à celui qui sera effectivement nécessaire, autrement dit la marge est nécessairement élevée, ce qui entraine une sous exploitation du canal.

Le document D1, de MICHEL NAHAS ET AL, et de titre "Asynchronous relay selection protocol for distributed coopérative networks", XP032263801, divulgue un protocole dans un réseau sans fil impliquant l'envoi d'un message RTS par une source à un ensemble multiple de relais qui transmettent le RTS à la destination si la qualité de la liaison est suffisamment bonne. Un message SFR (sélection pour relai) est renvoyé de la destination à la source pour indiquer le relai à utiliser et pour que la source puisse démarrer la transmission des données.

Ainsi, au vu des différents inconvénients relevés par l'utilisation des techniques existantes, il existe un besoin pour pallier ces inconvénients et pour proposer un système « auto-adaptatif » qui découvre lui-même la cadence optimale avec laquelle transmettre les fragments d'un fichier de données sur un chemin de communication sans fil. La présente invention répond à ce besoin.

### Résumé de l'invention

L'invention est définie par le jeu de revendications joint.

Un objet de la présente invention concerne un procédé de transmission de données dans un réseau sans fil permettant d'adapter automatiquement la cadence de transmission de paquets de données au temps de transmission des paquets.

Avantageusement, l'invention permet un cadencement optimum des fragments de données à transmettre, de façon à optimiser le temps de transmission. L'invention permet une utilisation simultanée d'un maximum de liens de communication sur un chemin de routage.

La solution revendiquée se distingue d'une solution de type « cadencement régulier avec pause fixe entre fragments » ou de type « RTS-CTS » en ce qu'elle s'adapte automatiquement au temps de transmission des paquets.

L'invention trouvera des applications avantageuses dans de nombreux domaines techniques ayant recours à des réseaux de communication sans fil linéaires ou des réseaux maillés. L'invention est particulièrement bien adaptée au domaine de la surveillance et la maintenance des sites d'oléoducs sous-marins par l'intermédiaire d'un véhicule autonome sous-marin. En effet, le procédé revendiqué facilite la mise en place d'une infrastructure de communication entre un véhicule autonome et un navire amarré, par le biais d'un réseau mesh de modems acoustiques.

Pour obtenir les résultats recherchés, il est proposé un procédé mis en œuvre par ordinateur pour transmettre des blocs de données constitués de plusieurs fragments de données, dans un réseau sans fil comprenant une pluralité de nœuds, le réseau ayant au moins un chemin de routage défini entre un nœud source et un nœud destination et composé d'une pluralité de nœuds tels que trois nœuds en position n/n+1/n+2 sur le chemin de routage définissent une triade enfant/parent/grand-parent, le procédé comprenant au moins les étapes suivantes opérées sur une triade de nœuds enfant, parent et grand-parent :
envoyer depuis un nœud enfant un message de sondage enfant/parent, dit message « ping », vers un nœud parent;
envoyer depuis le nœud parent ayant reçu le message « ping », un message de sondage parent/grand-parent, dit message « yin », vers un nœud grand-parent, si le nœud parent est disponible, un nœud étant disponible s'il est dans l'état 'disponible';
envoyer depuis ledit nœud grand-parent ayant reçu le message « yin », un message de réponse au sondage parent/grand-parent, dit message « yang », vers ledit nœud parent, si le nœud grand-parent est disponible ;
envoyer dudit nœud parent ayant reçu le message « yang », un message de réponse au sondage enfant/parent, dit message « pong », vers ledit nœud enfant si le nœud parent est toujours disponible ; et
à la réception du message « pong » par le nœud enfant, transmettre un fragment de données du nœud enfant audit nœud parent.

Selon des modes de réalisation alternatifs ou combinés:
- les étapes du procédé sont répétées pour plusieurs triades de nœuds enfant/parent/grand-parent, sur un chemin de routage depuis un nœud source émetteur de données jusqu'à un nœud destinataire des données.
- les triades de nœuds enfant/parent/grand-parent sont prédéfinies.
- l'étape de transmission d'un fragment de données consiste à transmettre successivement des paquets de données.
- le procédé comprend de plus une étape de vérification par le nœud parent de l'intégrité du fragment de données reçu, transmis par le nœud enfant.
- les messages de sondage « ping », « yin » et les messages de réponse au sondage « yang », « pong », sont des messages courts codés en ASCII.

L'invention a aussi pour objet un dispositif pour transmettre dans un réseau sans fil des blocs de données constitués de plusieurs fragments de données, le dispositif comprenant des moyens pour mettre en œuvre les étapes du procédé revendiqué.

Selon des modes de réalisation alternatifs ou combinés:
- le réseau sans fil est un réseau maillé.
- le réseau maillé est un réseau maillé comprenant une pluralité de modems acoustiques.
- un premier modem parmi la pluralité des modems acoustiques est un nœud source correspondant à un véhicule sous-marin autonome et un second modem parmi la pluralité des modems acoustiques est un nœud passerelle vers un navire, le dispositif permettant la transmission de données relatives à des rapports de mesure, depuis le véhicule sous-marin autonome vers le navire.
- le premier modem et le second modem sont couplés respectivement à un contrôleur de modem, notamment par une liaison série RS232.
- la vérification de l'état d'un nœud est gérée par une machine d'état.

L'invention couvre aussi un produit programme d'ordinateur, ledit programme d'ordinateur comprenant des instructions de code non transitoire permettant d'effectuer les étapes du procédé revendiqué, lorsque ledit programme est exécuté sur un ordinateur.

### Description des figures

Différents aspects et avantages de l'invention vont apparaitre en appui de la description d'un mode préféré d'implémentation de l'invention mais non limitatif, avec référence aux figures ci-dessous :
La figure 1 est une représentation simplifiée d'un réseau de communication sans fil linéaire ;
La figure 2 est une représentation simplifiée d'une communication multi-bonds dans un réseau de communication sans fil linéaire ;
La figure 3 est une représentation simplifiée d'une communication multi-bonds multi-fragmentaire dans un réseau de communication sans fil linéaire ;
La figure 4 est une représentation simplifiée d'un réseau maillé de communication permettant une implémentation de l'invention ;
La figure 5 est une représentation simplifiée du principe de sondage en deux bonds mis en œuvre dans le procédé de l'invention ;
La figure 6 est une représentation simplifiée d'une infrastructure de communication d'un réseau maillé de modems acoustiques permettant d'implémenter le dispositif de l'invention ;
La figure 7 illustre une séquence de communication de messages pour la transmission de fragments de fichiers, mettant en œuvre les principes de sondage de l'invention selon un mode de réalisation; et
La figure 8 est une représentation simplifiée d'une machine d'état permettant de mettre en œuvre le procédé de l'invention.

### Description détaillée de l'invention

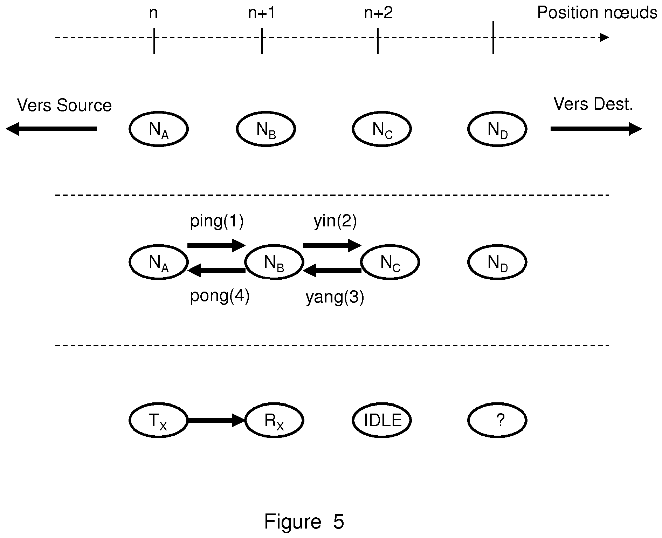

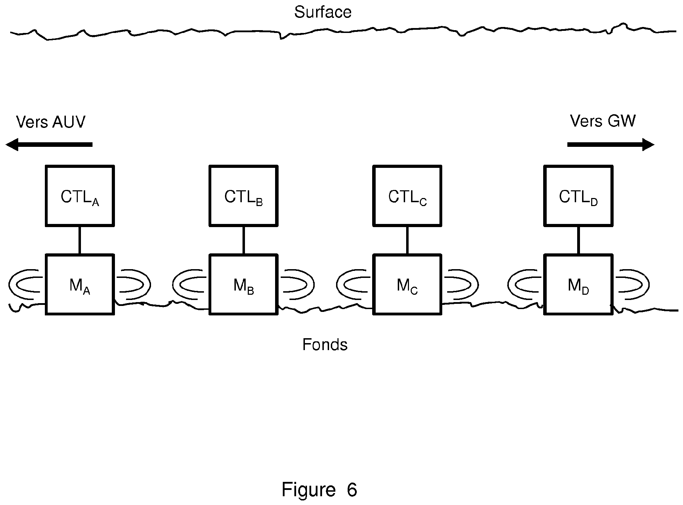

La figure 5 est une représentation simplifiée du principe de sondage en deux bonds sur une triade de nœuds, mis en œuvre dans le procédé de l'invention. Pour permettre la description, quatre nœuds (N_{A}, N_{B}, N_{C}, N_{D}) sont illustrés. Ils peuvent être par exemple des nœuds intermédiaires d'un chemin de routage dans un réseau mesh tel que celui de la figure 4, entre un nœud source et un nœud destinataire. Dans un contexte d'implémentation de l'invention pour le domaine maritime, par exemple celui de la surveillance et la maintenance des sites d'oléoducs sous-marins, le réseau maillé peut être une infrastructure permettant d'établir des communications entre un véhicule autonome sous-marin (ou AUV pour « Autonomous Underwater Vehicule) et un navire amarré, l'UAV faisant office de nœud source (émetteur initial) ayant à envoyer des blocs de données au navire amarré faisant office de nœud destinataire final pour recevoir les blocs de données. La transmission des données se fait via des chemins de routage définis pour le réseau maillé. Le réseau maillé comprend une pluralité de nœuds de communication entre un nœud source (AUV) et un nœud passerelle (GW), comme représenté sur la figure 6. Chaque nœud est composé d'un modem sous-marin acoustique (M_{A}, M_{B}, M_{C}, M_{D}), chaque modem est couplé respectivement à un contrôleur de modem (CTL_{A}, CTL_{B}, CTL_{C}, CTL_{D}) par exemple via une liaison série RS-232. L'homme du métier comprend que la description est faite sur un exemple particulier d'implémentation de l'invention, mais que cela ne limite en rien les diverses implémentations dans des domaines différents et pour toute variante de réalisation qui maintient les principes du sondage en deux bonds de l'invention.

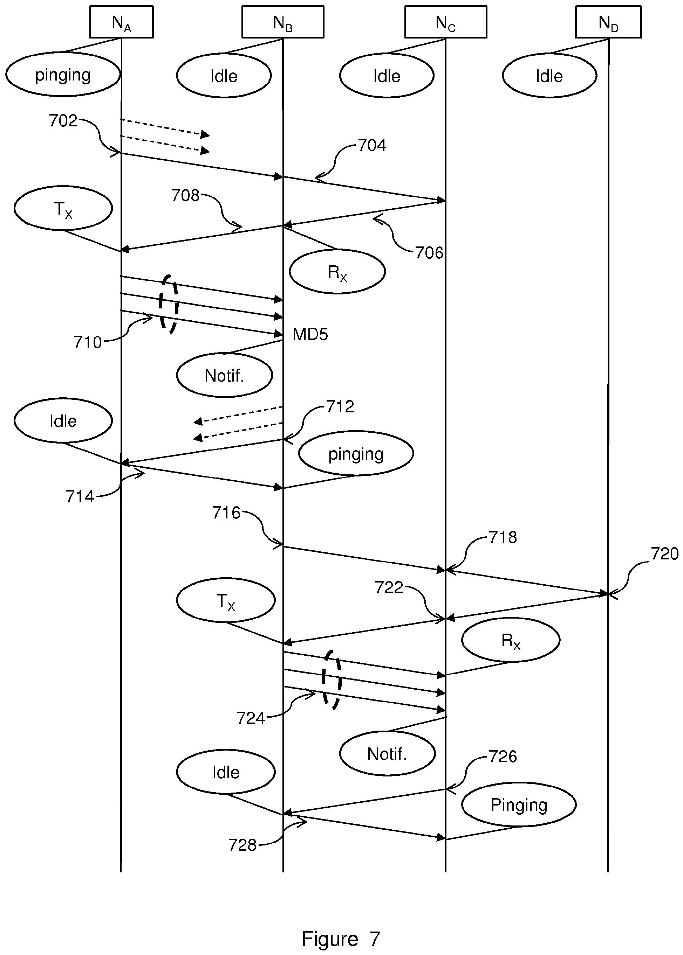

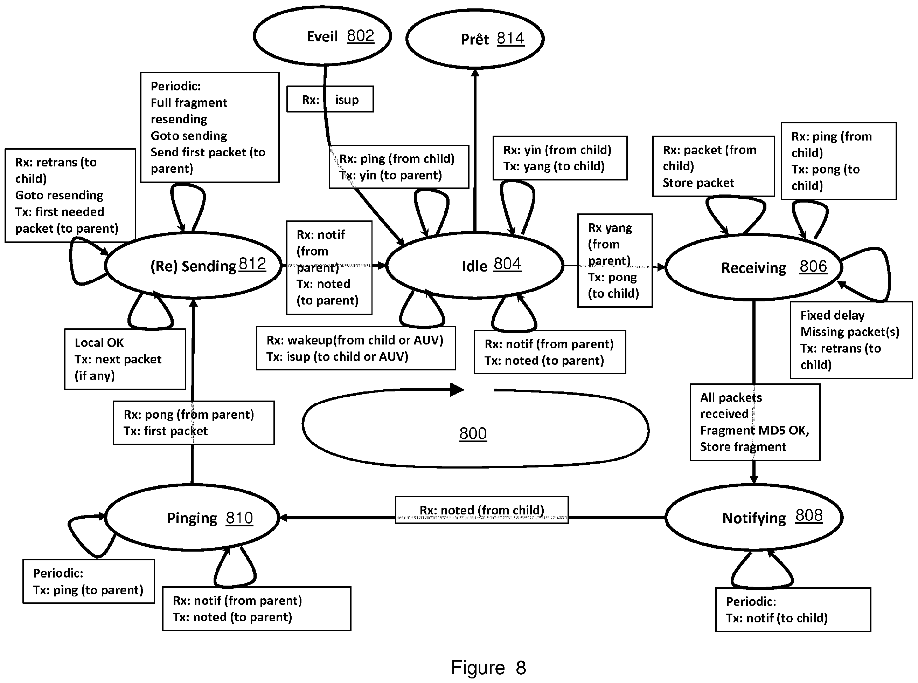

Revenant à la figure 5, pour un nœud N_{A} en position n dans un chemin de routage, le procédé de l'invention consiste à sonder les deux nœuds en position linéaire n+1 et n+2, soit les nœuds N_{B} et N_{C}. Le sondage selon l'invention, consiste à envoyer des signaux de sondage courts, i.e. courts relativement à la durée de transmission d'un fragment de donnés, de façon à s'assurer de la disponibilité des deux nœuds suivants parent et grand-parent. Avantageusement, les messages de sondage sont courts de manière à ne pas risquer de perturber une communication de fragment de données en cours. La vérification de la disponibilité d'un nœud dans le cadre de l'invention s'entend en termes de machine d'états : le nœud doit être dans l'état 'disponible', ou « idle » en anglais, comme cela est représenté sur la figure 7 ou la figure 8.

La figure 5 illustre sur la partie centrale le mécanisme de sondage ou séquence de sondage en deux bonds proposé : le nœud N_{A} en position « n » (à gauche sur la figure) baptisé nœud enfant qui souhaite transmettre un fragment de données transmet d'abord un signal de sondage court dénommé message de sondage « ping » à destination du nœud suivant N_{B} en position « n+1 », qui est baptisé nœud parent du nœud enfant N_{A} en position n. Si le nœud parent N_{B} est disponible en ce qu'il est dans un état d'attente, il transmet à son tour un signal de sondage court dénommé message de sondage « yin » vers son propre parent qui est le nœud N_{C} en position « n+2 ». Le nœud en position n+2 est aussi le nœud grand-parent du nœud enfant en position « n ». Si le nœud grand-parent est disponible, il répond au nœud parent N_{B} en position « n+1 » avec un signal de réponse au sondage court dénommé message de réponse « yang ». Si le nœud en position « n+1 » est toujours disponible, il envoie au nœud N_{A} en position « n » un signal de réponse au sondage court dénommé « pong ». La réception du message de réponse au sondage « pong » autorise le nœud N_{A} en position « n » à s'engager dans la transmission du fragment en cours vers le nœud N_{B} en position « n+1 ». Ainsi, le séquencement d'un sondage en deux bonds sur une triade de nœuds permet un cadencement optimum des fragments de données à transmettre pour un bloc de données, et permet d'optimiser le temps de transmission.

Lorsqu'un nœud initial enfant a un ou plusieurs fragments à transmettre, il doit ainsi sonder ses nœuds « parent et grand-parent » selon ce mécanisme de sondage en deux bonds, jusqu'à obtenir un message de réponse au sondage « pong » avant de transmettre un fragment. Comme illustré sur la partie basse de la figure 5, après réception du message pong validant la possibilité de transmission, le nœud initial N_{A} passe dans un état de transmetteur « T_{X} », le nœud N_{B} passe dans un état de récepteur « R_{X} », et le nœud N_{C} passe dans un état d'attente « IDLE ».

Si lors d'un sondage, l'un des deux nœuds parent ou grand-parent n'est pas disponible, le nœud enfant initial ne reçoit alors pas de message de réponse au sondage pong, et il relance régulièrement un message de sondage ping vers son nœud parent, qui dès qu'il est disponible envoie un message de sondage yin au nœud grand-parent. La transmission d'un fragment de fichier ne se fera qu'après réception par le nœud initial d'un message de réponse au sondage (le message pong).

La figure 7 illustre une séquence de communication de messages pour la transmission de fragments de fichiers, mettant en œuvre les principes du sondage en deux bonds de l'invention selon un mode de réalisation. La séquence où sur la figure le temps s'écoule vers le bas, est décrite pour l'envoi de paquets de données correspondant à des fragments de fichiers, sur un chemin de routage établi entre un nœud source et un nœud destination comprenant au moins une chaine de nœuds N_{A}, N_{B}, N_{C}, N_{D}. Un chemin de routage peut être défini de manière statique afin que chaque nœud du réseau soit préconfiguré en ayant connaissance des nœuds voisins constituant les nœuds enfant, parent et grand-parent. La séquence de sondage en deux bonds s'applique sur l'ensemble des triades enfant/parent/grand-parent constituant un chemin de routage entre un nœud source émetteur de données et un nœud destination récepteur des données.

Revenant à la figure 7, le nœud N_{A} dispose à un moment donné d'un fragment de données à envoyer. Ce fragment a été reçu par le nœud N_{A} via le nœud qui le précédait dans la chaine, non représenté sur la figure. Cette chaine de nœuds est supposée ainsi constituer une partie d'une chaine plus longue permettant les communications par exemple entre un véhicule autonome sous-marin (AUV) et un navire amarré correspondant à une passerelle (GW), dans un mode de réalisation pour un réseau mesh acoustique. L'homme du métier comprend que le nœud N_{A} peut correspondre au véhicule autonome sous-marin ou à un nœud intermédiaire du chemin de routage, le principe de sondage en deux bonds restant le même. De manière similaire, le nœud N_{D} peut correspondre soit à un nœud intermédiaire, soit au nœud passerelle.

Le nœud enfant N_{A} envoie (702) vers son voisin parent dans la chaine de nœuds, i.e. le nœud N_{B}, des messages de sondage de type « ping ». La structure d'un message court de sondage ping est représentée ci-après dans un mode de réalisation où le nom du message est le contenu du message en code ASCII :
Message "ping" => 4 octets, codes ASCII: 'p','i','n','g'

Au niveau MAC, un message de sondage « ping » est adressé au nœud parent du nœud enfant initiateur du message de sondage ping.

Ces messages sont envoyés régulièrement, jusqu'à réception d'un message « pong ». La figure 7 montre un cas où deux premiers messages « ping » (illustrés par les traits pointillés) ne sont pas reçus par le nœud parent N_{B}, afin d'illustrer que des défauts de communication peuvent exister. Selon l'exemple, le troisième message « ping » qui est envoyé est bien reçu par le nœud parent N_{B}. Le nœud N_{B} envoie (704) à son tour un message de sondage de type « yin » vers son parent, le nœud N_{C} qui est aussi le nœud grand-parent du nœud initial N_{A}. La structure d'un message court de type yin est représentée ci-après dans un mode de réalisation où le nom du message est le contenu du message en code ASCII :
Message "yin" => 3 octets, codes ASCII : 'y','i','n'

Au niveau MAC, un message de sondage « yin » est adressé au nœud parent du nœud initiateur du message yin.

A réception du message yin, le nœud N_{C} envoie (706) un message de réponse court de type « yang » au nœud N_{B} qui à réception, envoie (708) un message de réponse de type « pong » au nœud N_{A}.

La structure du message court de type yang et du message court de type pong est représentée ci-après dans un mode de réalisation où le nom du message est le contenu du message en code ASCII :
Message "yang" => 4 octets, codes ASCII: 'y','a','n','g'
Message "pong" => 4 octets, codes ASCII: 'p','o','n','g'

Au niveau MAC, un message de réponse au sondage « yang » est adressé au nœud parent qui a envoyé le message de sondage « yin », et un message de réponse au sondage « pong « est adressé au nœud enfant qui a envoyé le message de sondage initial « ping ».

Pour des raisons de simplification de la description, les messages (yin, yang, pong) sont considérés envoyés et reçus sans défaut de communication, bien que différents scenarios d'échec de communication puissent être envisageables sur ces messages, comme par exemple la perte d'un ou plusieurs messages « yin » ou « yang » ou « pong ». Avantageusement, comme le message « ping » est envoyé par le nœud initial N_{A} à intervalles réguliers, ce dernier va recevoir à un moment donné, une réponse par message de réponse au sondage « pong » caractérisant l'état de disponibilité des deux nœuds suivants N_{B} et N_{C} dans le chemin de routage, et ce en dépit d'un ou plusieurs défauts de communication ayant pu engendrer des pertes de message (c'est-à-dire des transmissions de messages qui ne donnent pas lieu à réception dans le nœud récepteur cible).

A réception du message de réponse au sondage « pong », le nœud N_{A} s'engage dans la transmission (710) d'un premier fragment de données à destination du nœud suivant N_{B}. Dans l'exemple de la figure 7, la transmission d'un fragment de données est subdivisée en l'envoi successivement de trois paquets illustrés par le regroupement des trois flèches en traits pointillés. Dans une réalisation pour réseau mesh acoustique où un nœud est constitué d'un modem et de son contrôleur, à chaque transmission d'un paquet du contrôleur de modem acoustique vers son modem acoustique, le modem peut répondre par un signal «OK » indiquant que le paquet a bien été mis en file d'attente et qu'il va être envoyé sur le canal acoustique.

Le procédé général de transmission peut comporter un mécanisme de retransmission sélective. Si au bout d'un délai arbitraire, le nœud récepteur n'a pas reçu la totalité des paquets attendus, il envoie vers le nœud émetteur une demande de réémission des paquets manquants. Ce mécanisme suppose des structures des entêtes de paquets qui renseignent le récepteur sur l'index du paquet reçu dans le fragment ainsi que sur l'index du fragment dont ce paquet est issu.

Dans d'autres modes de réalisation, le fragment de données est envoyé en un seul paquet de données. Le procédé général de transmission peut comporter un mécanisme de retransmission de l'ensemble du fragment. Si au bout d'un délai donné l'émetteur n'a pas reçu un signal venant du récepteur le notifiant de la bonne réception (message de type « notif »), il retransmet l'intégralité du fragment, c'est-à-dire tous les paquets le composant dans l'hypothèse où le fragment est divisé en un ensemble de paquets.

Une fois le fragment de données reçu par le nœud suivant N_{B}, le procédé général de transmission peut effectuer une vérification de l'intégrité du fragment reçu. Cette vérification suppose l'existence d'un champ de contrôle inclus dans la trame du fragment reçu. Ce champ de contrôle peut être calculé par un algorithme de hash, par exemple de type « MD5 » portant sur les données contenues dans le fragment. De manière bien connue, le récepteur effectue de nouveau le calcul de ce hash et si le résultat correspond avec le hash reçu, le fragment reçu peut être déclaré intègre.

Revenant à la figure 7, si et quand le nœud suivant N_{B} a établi l'intégrité du fragment reçu, ce dernier notifie (712) au nœud émetteur N_{A} la bonne réception dudit fragment. Pour cela il envoie vers le nœud émetteur N_{A} des messages de type « notif » à intervalles réguliers, jusqu'à recevoir (714) du nœud N_{A} en retour un message de type « noted » l'informant qu'il a bien été notifié.

La figure 7 illustre aussi la notion d'état associé à chaque nœud. Au départ, le nœud initial N_{A} qui dispose d'un fragment de données à transmettre se trouve dans un état de (pinging) dans lequel il envoie (702) des signaux de sondage courts « ping » au nœud suivant N_{B} jusqu'à recevoir (708) de ce dernier le signal de réponse au sondage « pong ». Une fois le message « pong » reçu, le nœud N_{A} passe dans un état de transmission (T_{X}) où il peut transmettre le fragment vers le nœud N_{B}. Il demeure dans cet état jusqu'à recevoir du nœud N_{B} le message de notification. A réception de ce message (Notif.) le nœud N_{A} entre dans l'état (Idle) en attendant la réception d'un nouveau fragment.

Dans le même temps où le nœud N_{A} émetteur passe à l'état (pinging) puis (T_{X}) puis (Idle), le nœud N_{B} joue le rôle de récepteur et de notificateur, et passe successivement dans les états (Idle), (R_{X}) et (Notif.). Plus précisément, le nœud N_{B} passe de l'état (Idle) à l'état (R_{X}) à réception (706) du message de réponse au sondage « yang » issu du nœud N_{C}. Puis, lorsqu'il a reçu (710) la totalité du fragment et vérifié son intégrité, il passe à l'état (Notif.). Enfin lorsqu'il reçoit (714) du nœud N_{A} le message « noted », il passe dans l'état « pinging » car il vient de recevoir (710) un fragment qu'il doit à son tour transmettre au nœud suivant N_{C}. Il est à noter que le nœud N_{B} se retrouve alors dans l'état où se trouvait le nœud N_{A} au début de la séquence. Le nœud N_{B} s'engage alors dans la transmission du fragment vers le nœud N_{C} en suivant une même séquence que celle suivie par le nœud N_{A} précédemment avec un sondage en deux bonds (716, 718, 720, 722), l'envoi du fragment (724) et la notification (726, 728). Le nœud N_{B} passe par les états successifs de (Pinging), puis (TX), puis (Idle). Le nœud N_{C} joue le rôle de récepteur et suit une séquence identique à celle suivie précédemment par le nœud N_{B} quand il est récepteur du nœud N_{A}, en passant par les états successifs de (Rx), puis (Notif.), puis (Pinging).

En complément, les différents états dans lesquels un nœud peut se trouver sont aussi illustrés sur la machine d'état de la figure 8.

Dans un mode de réalisation pour un réseau mesh de modem acoustiques, trois machines d'état différentes peuvent être implémentées : une pour contrôler le modem embarqué dans le véhicule autonome sous-marin, une pour contrôler chaque modem du réseau mesh et une pour contrôler le modem associé à la passerelle. La figure 8 illustre une représentation simplifiée d'une machine d'état (800) pour un modem du réseau mesh.

La gestion du réveil d'un modem n'est pas illustrée, et le premier état (802) d'un modem est représenté par son « éveil » (ou « waking up » en anglais). En effet, un modem étant alimenté par batterie, il convient de limiter sa consommation autant que possible pour maximiser la durée de vie de la batterie avant recharge. Pour cela les modems ont la capacité de « s'endormir » et de se réveiller sur réception de signaux acoustiques. Une fois endormi, le modem consomme peu sur la batterie. Quand un modem est dans l'état d'éveil, le contrôleur de modem s'assure de la fonctionnalité du modem en vérifiant sa réponse à des commandes simples. Cet état est introduit du fait de l'asynchronisme entre le contrôleur de modem et le modem associé. Il est possible qu'au réveil le contrôleur de modem devienne fonctionnel avant le modem, il convient donc que le contrôleur « patiente » en interrogeant le modem acoustique, jusqu'à ce que celui-ci fournisse une réponse caractéristique de son état éveillé et opérationnel. Le contrôleur passe alors dans un état « Prêt » (814) (ou « Ready » en anglais) où il est prêt. Si le contrôleur mesh passe à l'état « Ready » c'est qu'il a été réveillé. Il peut avoir été réveillé pour différentes raisons. L'une de ces raisons peut être qu'il doit contribuer à la dissémination d'une notification dans le réseau mesh, laquelle notification pourra être récupérée par le véhicule autonome sous-marin (AUV) lorsqu'il s'attachera (en termes de communication) à un nœud du réseau mesh. Si le nœud a été réveillé pour participer à la transmission d'un rapport de l'AUV vers la passerelle, il entre dans un état dit « waking_up » où la première chose à faire pour transmettre un rapport de l'AUV à la passerelle consiste à « réveiller » tous les modems qui sont sur le chemin de l'AUV vers la passerelle. Une fois tous réveillés, ces modems sont sensés garder l'état éveillé jusqu'à ce qu'ils aient traités tous les fragments allant du premier fragment reçu jusqu'au dernier fragment du rapport (ou bien jusqu'à ce qu'un délai d'expiration soit atteint). Ils peuvent ensuite s'endormir à nouveau. Une fois que l'AUV s'est attaché à un nœud du réseau mesh dans le but de transmettre un rapport, il demande au nœud sélectionné de réveiller son parent, lequel va réveiller son parent à son tour, etc, jusqu'à atteindre le nœud passerelle.

Si un nœud est réveillé pour transmettre un rapport vers la passerelle, le premier état dans lequel il rentre est un état dans lequel il s'efforce de réveiller son nœud parent. Il s'agit de l'état d'éveil (802). Dans cet état, il envoie un message acoustique dénommé « wakeup » en broadcast jusqu'à recevoir de son parent une confirmation d'éveil concrétisée par un message dit « isup ». Une fois le message « isup » reçu du parent, le contrôleur de modem entre dans un état d'attente « idle » (804).

Il est à noter que des collisions ne sont pas exclues entre les messages « wakeup » et les messages « isup ». Pour éviter que des situations de collisions systématiques perdurent, les messages « wakeup » ne sont pas émis à intervalles réguliers. Par exemple la période entre deux messages « wakeup » peut être de 2 ou 3 secondes, le choix étant alors fait sur un critère purement aléatoire.

Une fois l'état « idle » atteint, un nœud mesh est disponible pour relayer des fragments vers le nœud parent. Les nœuds mesh suivent nécessairement la séquence d'états suivante:
*Etat Idle (804)* =*> Etat Rx (806)* =*> Etat Notif. (808)* =*> Etat Ping. (810)* =*> Etat Tx (812)* =*> Etat Idle (804)*

Ainsi, un nœud mesh attend un prochain fragment en état « Idle » (804), puis le reçoit en état « R_{X} » (806), puis notifie la bonne réception au nœud enfant qui lui a transmis ce fragment en état « Notif.» (808), puis entre dans l'état « Ping. » (810) pour un sondage à deux bonds où il s'assure de l'état de disponibilité de son parent et de son grand-parent, puis entre dans l'état de transmission ou de retransmission « T_{X} » (812), puis revient à l'état « Idle » (804) où il redevient disponible pour recevoir un fragment suivant. Quand un fragment courant traité est le dernier fragment du rapport à envoyer, le nœud mesh retourne à l'état « Ready » (814) tout en programmant un endormissement rapide (de sorte qu'il ne restera pas longtemps dans l'état « ready »).

La figure 8 montre qu'à chaque état, un nœud peut recevoir (Rx) ou transmettre (Tx) des messages ou des notifications parents/enfants, selon la position du nœud et la progression de l'envoi de fragments dans le chemin vers la destination.

De manière similaire mais non illustré, les nœuds source (AUV) et de destination (GW) sont régis par des machines d'états. Le procédé général de transmission, associé au procédé de sondage en deux bonds, permet avantageusement d'apporter une solution à la problématique technique de comment permettre à un véhicule sous-marin autonome de transmettre un rapport de mesure vers un nœud passerelle via un réseau mesh de modems acoustiques, dans un temps minimum, compte tenu des contraintes de débits faibles sur les liens acoustiques et avec une consommation minimale sur les batteries des modems.

## Revendications

1. Un procédé (700) mis en œuvre par ordinateur pour transmettre des blocs de données constitués de plusieurs fragments de données, dans un réseau sans fil comprenant une pluralité de nœuds, le réseau ayant au moins un chemin de routage défini entre un nœud source et un nœud destination et composé d'une pluralité de nœuds tels que trois nœuds en position n/n+1/n+2 sur le chemin de routage définissent une triade enfant/parent/grand-parent, le procédé comprenant au moins les étapes suivantes opérées sur une triade de nœuds enfant, parent et grand-parent :
envoyer (702) depuis un nœud enfant un message de sondage enfant/parent, dit message « ping », vers un nœud parent;
envoyer (704) depuis le nœud parent ayant reçu le message « ping », un message de sondage parent/grand-parent, dit message « yin », vers un nœud grand-parent, si le nœud parent est disponible en état d'attente;
envoyer (706) depuis ledit nœud grand-parent ayant reçu le message « yin », un message de réponse au sondage parent/grand-parent, dit message « yang », vers ledit nœud parent, si le nœud grand-parent est disponible ;
envoyer (708) dudit nœud parent ayant reçu le message « yang », un message de réponse au sondage enfant/parent, dit message « pong », vers ledit nœud enfant si le nœud parent est toujours disponible ; et
à la réception du message « pong » par le nœud enfant, transmettre (710) un fragment de données du nœud enfant audit nœud parent.

2. Le procédé selon la revendication 1 dans lequel les étapes sont répétées pour plusieurs triades de nœuds enfant/parent/grand-parent, sur le chemin de routage depuis le nœud source émetteur de données jusqu'au nœud destinataire des données.

3. Le procédé selon les revendications 1 ou 2 dans lequel les triades de nœuds enfant/parent/grand-parent sont prédéfinies.

4. Le procédé selon l'une quelconque des revendications 1 à 3 dans lequel l'étape de transmission d'un fragment de données consiste à transmettre successivement des paquets de données.

5. Le procédé selon l'une quelconque des revendications 1 à 4 comprenant de plus une étape de vérification par le nœud parent de l'intégrité du fragment de données reçu, transmis par le nœud enfant.

6. Le procédé selon l'une quelconque des revendications 1 à 5 dans lequel les messages de sondage « ping », « yin » et les messages de réponse au sondage « yang », « pong », sont des messages courts codés en ASCII.

7. Un dispositif pour transmettre des blocs de données constitués de plusieurs fragments de données, dans un réseau sans fil comprenant une pluralité de nœuds, le réseau ayant au moins un chemin de routage défini entre un nœud source et un nœud destination et étant composé d'une pluralité de nœuds tels que trois nœuds en position n/n+1/n+2 sur le chemin de routage définissent une triade enfant/parent/grand-parent, le dispositif comprenant des moyens pour mettre en œuvre les étapes du procédé selon l'une quelconque des revendications 1 à 6.

8. Le dispositif selon la revendication 7 dans lequel le réseau sans fil est un réseau maillé.

9. Le dispositif selon la revendication 8 dans lequel le réseau maillé est un réseau maillé comprenant une pluralité de modems acoustiques.

10. Le dispositif selon la revendication 9 dans lequel un premier modem parmi la pluralité des modems acoustiques est un nœud source correspondant à un véhicule sous-marin autonome et un second modem parmi la pluralité des modems acoustiques est un nœud passerelle vers un navire, le dispositif permettant la transmission de données relatives à des rapports de mesure, depuis le véhicule sous-marin autonome vers le navire.

11. Le dispositif selon la revendication 10 dans lequel le premier modem et le second modem sont couplés respectivement à un contrôleur de modem, notamment par une liaison série RS232.

12. Le dispositif selon l'une quelconque des revendications 1 à 11 dans lequel la vérification de l'état d'un nœud est gérée par une machine d'état.

13. Un produit programme d'ordinateur, ledit programme d'ordinateur comprenant des instructions de code non transitoire permettant d'effectuer les étapes du procédé selon l'une quelconque des revendications 1 à 6, lorsque ledit programme est exécuté sur un ordinateur.

## Patentansprüche

1. Computerimplementiertes Verfahren (700) zum Übertragen von aus mehreren Datenfragmenten bestehenden Datenblöcken in einem drahtlosen Netzwerk, das eine Vielzahl von Knoten umfasst, wobei das Netzwerk mindestens einen Routingpfad aufweist, der zwischen einem Quellknoten und einem Zielknoten definiert ist und aus einer Vielzahl von Knoten besteht, so dass drei Knoten an Position n/n+1/n+2 auf dem Routingpfad eine Kind/Eltern/Großeltern-Triade definieren, wobei das Verfahren mindestens die folgenden Schritte umfasst, die auf einer Triade aus Kind-, Eltern- und Großelternknoten durchgeführt werden:
Senden (702) einer "ping" genannten Kind/Eltern-Sondierungsnachricht von einem Kindknoten zu einem Elternknoten;
Senden (704) einer "yin" genannten Eltern/Großeltern-Sondierungsnachricht von dem Elternknoten, der die "ping"-Nachricht empfangen hat, zu einem Großelternknoten, wenn der Elternknoten im Wartezustand verfügbar ist;
Senden (706) einer "yang" genannten Antwortnachricht auf die Eltern/Großeltern-Sondierung von dem Großelternknoten, der die "yin"-Nachricht erhalten hat, zum Elternknoten, wenn der Großelternknoten verfügbar ist;
Senden (708) einer "pong" genannten Antwortnachricht auf die Kind/Eltern-Sondierung von dem Elternknoten, der die "yang"-Nachricht empfangen hat, zu dem Kindknoten, wenn der Elternknoten noch verfügbar ist; und
Übertragen (710), nach Empfang der "pong"-Nachricht durch den Kindknoten, eines Datenfragments vom Kindknoten zum Elternknoten.

2. Verfahren nach Anspruch 1, bei dem die Schritte für mehrere Triaden von Kind-/Eltern-/Großelternknoten auf dem Routingpfad vom datensendenden Quellknoten zum datenempfangenden Knoten wiederholt werden.

3. Verfahren nach Anspruch 1 oder 2, bei dem die Triaden von Kind/Eltern/Großeltern-Knoten vordefiniert sind.

4. Verfahren nach einem der Ansprüche 1 bis 3, wobei der Schritt des Übertragens eines Datenfragments darin besteht, Datenpakete nacheinander zu übertragen.

5. Verfahren nach einem der Ansprüche 1 bis 4, das außerdem einen Schritt des Überprüfens, durch den Elternknoten, der Integrität des vom Kindknoten übertragenen empfangenen Datenfragments umfasst.

6. Verfahren nach einem der Ansprüche 1 bis 5, bei dem die Sondierungsnachrichten "ping", "yin" und die Antwortnachrichten auf die Sondierung "yang", "pong" ASCIIcodierte Kurznachrichten sind.

7. Vorrichtung zum Übertragen von Datenblöcken, die aus mehreren Datenfragmenten bestehen, in einem drahtlosen Netzwerk mit einer Vielzahl von Knoten, wobei das Netzwerk mindestens einen Routingpfad zwischen einem Quellknoten und einem Zielknoten aufweist und aus einer Vielzahl von Knoten besteht, so dass drei Knoten an Position n/n+1/n+2 auf dem Routingpfad eine Kind/Eltern/Großeltern-Triade definieren, wobei die Vorrichtung Mittel zum Durchführen der Schritte des Verfahrens nach einem der Ansprüche 1 bis 6 umfasst.

8. Vorrichtung nach Anspruch 7, wobei das drahtlose Netzwerk ein Maschennetzwerk ist.

9. Vorrichtung nach Anspruch 8, wobei das Maschennetzwerk ein Maschennetzwerk ist, das eine Vielzahl von akustischen Modems umfasst.

10. Vorrichtung nach Anspruch 9, wobei ein erstes Modem aus der Vielzahl von akustischen Modems ein Quellknoten ist, der einem autonomen Unterwasserfahrzeug entspricht, und ein zweites Modem aus der Vielzahl von akustischen Modems ein Gateway-Knoten zu einem Schiff ist, wobei die Vorrichtung die Übertragung von Messberichtsdaten von dem autonomen Unterwasserfahrzeug zu dem Schiff ermöglicht.

11. Vorrichtung nach Anspruch 10, bei der das erste Modem und das zweite Modem jeweils mit einem Modem-Controller, insbesondere über eine serielle RS232-Verbindung, gekoppelt sind.

12. Vorrichtung nach einem der Ansprüche 1 bis 11, bei der die Überprüfung des Zustands eines Knotens von einer Zustandsmaschine gesteuert wird.

13. Computerprogrammprodukt, wobei das Computerprogramm nichtflüchtige Codeanweisungen umfasst, um die Schritte des Verfahrens nach einem der Ansprüche 1 bis 6 durchzuführen, wenn das Programm auf einem Computer ausgeführt wird.

## Claims

1. A computer-implemented method (700) for transmitting data blocks formed by multiple data fragments, in a wireless network comprising a plurality of nodes, the network having at least one routing path defined between a source node and a destination node and composed of a plurality of nodes such that three nodes at positions n/n+1/n+2 on the routing path define a child/parent/grandparent triad, the method comprising at least the following steps performed on a triad of child, parent and grandparent nodes:
sending (702), from a child node, a child/parent probing message, referred to as a "ping" message, to a parent node;
sending (704), from the parent node having received the "ping" message, a parent/grandparent probing message, referred to as a "yin" message, to a grandparent node if the parent node is available in a wait state;
sending (706), from said grandparent node having received the "yin" message, a parent/grandparent probing response message, referred to as a "yang" message, to said parent node if the grandparent node is available;
sending (708), from said parent node having received the "yang" message, a child/parent probing response message, referred to as a "pong" message, to said child node if the parent node is still available; and
upon reception of the "pong" message by the child node, transmitting (710) a data fragment from the child node to said parent node.

2. The method according to claim 1, wherein the steps are repeated for multiple triads of child/parent/grandparent nodes on the routing path, from the data transmitting source node up to the recipient node for the data.

3. The method according to claim 1 or claim 2, wherein the triads of child/parent/grandparent nodes are predefined.

4. The method according to any one of claims 1 to 3, wherein the data fragment transmission step consists in successively transmitting data packets.

5. The method according to any one of claims 1 to 4, additionally comprising a step of verification, by the parent node, of the integrity of the received data fragment transmitted by the child node.

6. The method according to any one of claims 1 to 5, wherein the "ping" and "yin" probing messages and the "yang" and "pong" probing response messages are short messages encoded in ASCII.

7. A device for transmitting data blocks, formed by multiple data fragments, in a wireless network comprising a plurality of nodes, the network having at least a routing path defined between a source node and a destination node and being composed of a plurality of nodes such that three nodes at positions n/n+1/n+2 on the routing path define a child/parent/grandparent triad, the device comprising means for implementing the steps of the method according to any one of claims 1 to 6.

8. The device according to claim 7, wherein the wireless network is a mesh network.

9. The device according to claim 8, wherein the mesh network is a mesh network comprising a plurality of acoustic modems.

10. The device according to claim 9, wherein a first modem among the plurality of acoustic modems is a source node corresponding to an autonomous underwater vehicle and a second modem among the plurality of acoustic modems is a gateway node to a ship, the device enabling the transmission of data relating to measurement reports, from the autonomous underwater vehicle to the ship.

11. The device according to claim 10, wherein the first modem and the second modem are coupled respectively to a modem controller, in particular via an RS232 serial link.

12. The device according to any one of claims 1 to 11, wherein verification of the state of a node is handled by a state machine.

13. A computer program product, said computer program comprising non-transitory code instructions for carrying out the steps of the method according to any one of claims 1 to 6, when said program is executed on a computer.
